# EUROPEAN PATENT APPLICATION

(11) **EP 2 112 606 A1**
(43) Date of publication of application: **28.10.2009**
(21) Application number: 09100234.5
(22) Date of filing: 10.04.2009
(51) Int. Cl.: G06F 17/30

(54) **Media storefront for interactive media service device**

(30) Priority: 21.04.2008 US 148590
(71) Applicant: WMode Inc., Calgary, Alberta T2L 2K7 (CA)
(72) Inventor: Mullen, Tom, Calgary, Alberta (CA)
(74) Representative: Hellmich, Wolfgang

(57) **Abstract**

A storefront for accessing digital media and services is provided. The storefront is installed on an interactive media service device. The storefront displays a list of digital media and services to a user based on the configuration of the interactive media service device and the user profile and preferences. The storefront is connected to a consolidated content catalog containing different types of the digital media. Storefront allows the user to view, browse, select, order and authorize payment for the digital media and services displayed on the screen or menu of the interactive media service device.

## Description

### BACKGROUND OF THE INVENTION

The invention relates generally to digital media distribution over the Internet. More particularly, the invention relates to a storefront for accessing the digital media using an interactive media service device.

In the present age of the Internet, digital media such as ringtones, software applications, software updates, plug-ins, advertisements, video files, audio files, and banners are desired by users using interactive media service devices such as cellular phones, digital cameras, television, and navigation systems. The user usually browses online catalogs and digital media providers to obtain a desired digital media. The digital media can be downloaded by the user from an online content catalog or from a website of a content (digital media) provider. The user may access the digital media directly or through a service provider such as a cellular communication service provider. For example, the user may send a request to download a ringtone via Short Messaging Service (SMS) to the communication service provider. The communication service provider, in turn, forwards this request to one of the content providers and the content provider then provides the ringtone to the user.

In the existing methodology, different types of the digital media and information associated with the digital media are not consolidated. The user needs to access different content providers or online catalogs for providing different digital media desired by the user. Further, the user, after downloading the desired digital media, needs to install the digital media on the desired interactive media service device. For example, the user may download a software application for installing 'slide show' feature on the cellular phone from the Internet and then transfers the software application onto the cellular phone. This makes the process time consuming and cumbersome for the user.

In light of the foregoing discussion, there is a need for system which provides a consolidated database of different types of digital media and also facilitates browsing of digital media over the Internet.

### SUMMARY

An object of the invention is to facilitate browsing and extraction of digital media over the Internet.

Another object of the invention is to facilitate targeted advertising of the digital media.

Yet another object of the invention is to provide digital media desired by a user efficiently.

Yet another object of the invention is to provide personalized digital media to a user.

To achieve the above mentioned objectives, the invention provides a storefront installed in an interactive media service device. The storefront includes a connecting module, an identifier, a display module, an input module and an extraction module. The connecting module establishes connection of the interactive media service device with a content catalog over the Internet. The content catalog is a consolidated database of different types of digital media. The identifier identifies digital media based on the user profile and type of the interactive media service device. Accordingly, the digital media is displayed to the user on the screen of the interactive media service device. The input module facilitates browsing through the displayed digital media. The extraction module extracts the digital media selected by the user from the content catalog, and a copy of the digital media is stored on the interactive media service device. Examples of the digital media include ringtones, software applications, advertisements, banners, pop-ups and the like. Examples of the interactive media service device include a cellular phone, a television, a digital camera, a navigation system, a printer and the like.

The storefront facilitates the process of digital media searching and provides personalized digital media to the user. Further, the storefront may also be used by merchants providing the digital media for targeted advertising. This is because storefronts may be installed on the interactive media service device based on the user profile and the type of the interactive media service device. Also, the storefront may be connected to a single content catalog (instead of multiple content catalogs) which makes the process of accessing and downloading efficient.

### BRIEF DESCRIPTION OF THE DRAWINGS

The preferred embodiments of the invention will hereinafter be described in conjunction with the appended drawings provided to illustrate and not to limit the invention, wherein like designations denote like elements, and in which:
FIG. 1 is a block diagram of an interactive media service device including a storefront in accordance with an embodiment of the invention;
FIG. 2 is a block diagram of a storefront in accordance with an embodiment of the invention; and
FIG. 3 is a snapshot of an exemplary storefront in accordance with an embodiment of the invention.

### DETAILED DESCRIPTION OF THE INVENTION

Various embodiments of the invention provide a storefront installed on an interactive media service device. The storefront displays to a user of the interactive media service device digital media and services based on the type of the device and the user profile. The storefront also enables the user to extract desired digital media from a content catalog.

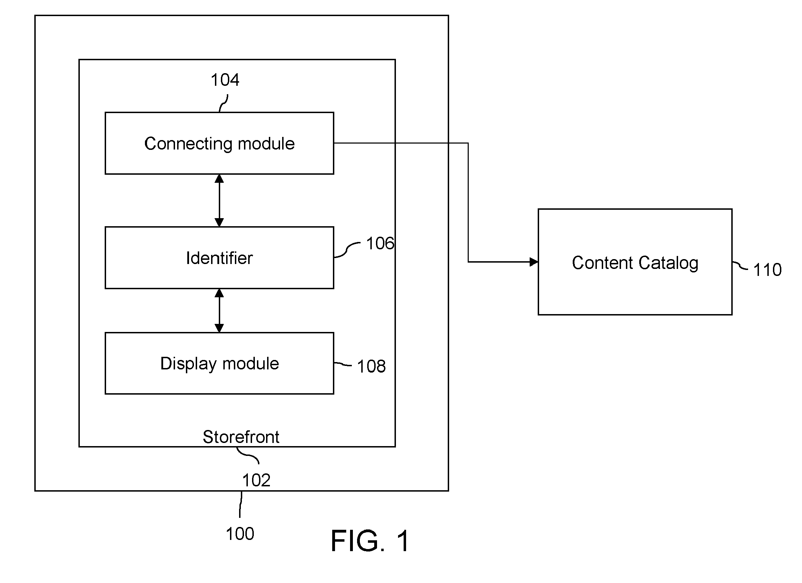

FIG. 1 is a block diagram of an interactive media service device 100 in accordance with an embodiment of the invention. Interactive media service device 100 includes a storefront 102. Storefront 102 includes a connecting module 104, an identifier 106 and a display module 108. In various embodiments of the invention, interactive media service device 100 is connected to a content catalog 110 via the Internet.

Storefront 102 is displayed as an icon or a button on a main menu or screen of interactive media service device 100, hereinafter referred to as device 100. Connecting module 104 connects storefront 102 and device 100 to content catalog 110 via the Internet. Identifier 106 identifies digital media and related information based on specifications/configuration of device 100 and the profile of a user of device 100. The specifications, for example, may include type of device 100, memory size, and screen size of device 100. The user profile, for example, may include user interests, browsing history, and the like. The list of the digital media and any other related information is displayed to the user by using display module 108. Display module 108 enables the user to navigate through the digital media and the related information. In various embodiments of the invention, navigation includes viewing, browsing, selecting, ordering and authorizing payment for the digital media displayed on the screen of device 100.

Examples of device 100 may include a cellular phone, a digital camera, a television, a printer, navigation systems, personal video recorder, home appliances and the like. Further examples of digital media include, but are not limited to, ringtones, advertisements, photo sharing services, Really Simple Syndication (RSS) feeds, software applications, banners, games, entertainment content, messaging applications, telematics, social networking software applications, menus and recipes related to home appliances, and applications for ordering groceries.

In various embodiments of the invention, Storefront 102 is customized based on the configuration of device 100 and the user profile and preferences. Storefront 102 is installed on device 100 by the manufacturer of device 100. In another embodiment of the invention, storefront 102 is installed by a third party vendor. Further, storefront 102 may be embedded in the operating system of device 100.

In various embodiments, content catalog 110 is a consolidated database of different types of digital media obtained from online catalogs and different content providers. Content catalog 110 stores the digital media, metadata associated with the digital media, and commercial agreements related to distribution of the digital media. This enables the user to make payments and extract the digital media via storefront 102 in an easy manner. Further, content catalog 110 is updated periodically after predefined time intervals, for example, quarterly, monthly, or daily.

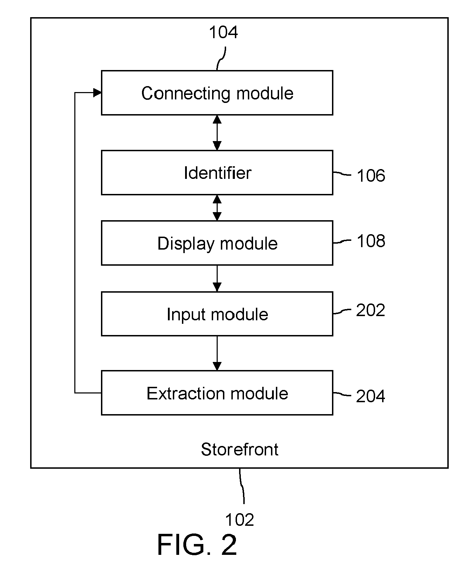

FIG. 2 is a block diagram of storefront 102 in accordance with an embodiment of the invention. Storefront 102 includes connecting module 104, identifier 106, display module 108, an input module 202 and an extraction module 204.

As explained in conjunction with FIG. 1, display module 108 lists digital media and any other related information on device 100 obtained from content catalog 110 via identifier 106 and connecting module 104. Input module 202 enables the user to select desired digital media from the list displayed. For example, the desired digital media may be selected by clicking on icons of the digital media. Extraction module 204 then extracts the selected digital media from content catalog 110 via connecting module 104. Extraction module 204 also installs the digital media on device 100. Further, extraction module 204 also tracks the digital media and related information selected by the user. For example, extraction module 204 maintains a log of the digital media selected by the user.

Storefronts for different devices 100 include digital media and services specific to device 100. For example, the storefront for a cellular phone may include software applications for the cellular phone, ringtones, tune tracker, images, wallpapers and the like. The storefront for a digital camera may include software applications for the digital camera, photo-sharing applications or services, and the like. The storefront for a printer may include printing services, software for the printer, and the like. The storefront for a television (TV) may include software for the TV, social networking services or applications, entertainment applications, games and the like. The storefront for home appliances may include software for the home appliance, menus and recipes, ability to order groceries, social networking services or applications, entertainment content, home automation applications, and the like.

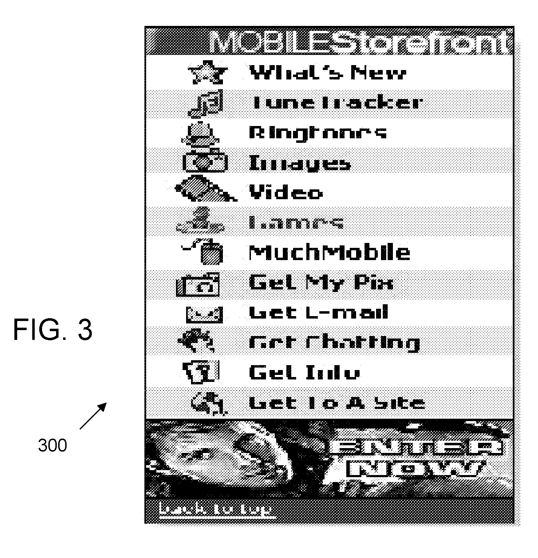

In various embodiments of the invention, connecting module 104, identifier 106 display module 108, input module 202, and extraction module 204 may be implemented as hardware modules, software modules, a firmware and a combination thereof. An exemplary storefront is described in conjunction with FIG. 3

FIG. 3 is an exemplary storefront 300 in accordance with an embodiment of the invention. Storefront 300 is installed on a cellular phone in this example. Storefront 300 displays to the user different digital media and services such as tune tracker, ringtones, games, e-mails and the like. The user may click on any one of the digital media and services and may download or utilize the digital media and services. An advertisement banner may also be displayed as shown on the bottom of storefront 300.

The storefront, as described in the present invention or any of its components, may be embodied in the form of a computer system. Typical examples of a computer system include a general-purpose computer, a programmed microprocessor, a micro-controller, a peripheral integrated circuit element, and other devices or arrangements of devices that are capable of implementing the features that constitute the system of the present invention.

The computer system comprises a computer, an input device, a display unit and the Internet. The computer further comprises a microprocessor. The microprocessor is connected to a communication bus. The computer also includes a memory. The memory may include Random Access Memory (RAM) and Read Only Memory (ROM). The computer system further comprises a storage device. The storage device can be a hard disk drive or a removable storage drive such as a floppy disk drive, optical disk drive, etc. The storage device can also be other similar means for loading computer programs or other instructions into the computer system. The computer system also includes a communication unit. The communication unit allows the computer to connect to other databases and the Internet through an I/O interface. The communication unit allows the transfer as well as reception of data from other databases. The communication unit may include a modem, an Ethernet card, or any similar device, which enables the computer system to connect to databases and networks such as LAN, MAN, WAN and the Internet. The computer system facilitates inputs from a user through the input device, accessible to the system through the I/O interface.

The computer system executes a set of instructions that are stored in one or more storage elements in order to process input data. The storage elements may also hold data or other information as desired. The storage element may be in the form of an information source or a physical memory element present in the processing machine.

The set of instructions may include various commands that instruct the processing machine to perform specific tasks such as the features that constitute the system of the present invention. The set of instructions may be in the form of a software program. Further, the software may be in the form of a collection of separate programs, a program module with a larger program or a portion of a program module, as in the present invention. The software may also include modular programming in the form of object-oriented programming. The processing of input data by the processing machine may be in response to user commands, results of previous processing or a request made by another processing machine.

## Claims

1. A storefront for accessing media and services, the storefront being installed in an interactive media service device, the storefront comprising:
a. a connecting module, the connecting module being capable of connecting the interactive media service device to a content catalog comprising media and related information;
b. an identifier, the identifier being capable of identifying media and related information based on specifications of the interactive media service device and profile of a user of the interactive media service device; and
c. a display module, the display module being capable of displaying the media and related information to the user.

2. The storefront according to claim 1 wherein the interactive media service device is at least one of a cellular phone, a digital camera, a television, a telematics system, microwave oven, personal video recorder, and a printer.

3. The storefront according to claim 1 or 2 further comprising an input module, the input module enabling the user selection of desired media.

4. The storefront according to one of the preceding claims further comprising an extraction module for extracting media and related information selected by the user onto the interactive media service device.

5. The storefront according to claim 4 wherein the extraction module tracks the digital media and related information selected by the user.

6. The storefront according to one of the preceding claims wherein the media consists of at least one of ringtones, RSS feeds, games, image files, advertisements, banners, software applications, application services, video files, audio files, and pop-ups.

7. The storefront according to one of the preceding claims wherein the specifications of the interactive media service device consists of at least one of the type of interactive media service device, storage capacity, and screen size.

8. The storefront according to one of the preceding claims wherein the content catalog is web based.

9. An interactive media service device comprising a storefront, the storefront comprising:
a. a connecting module, the connecting module being capable of connecting the interactive media service device to a content catalog;
b. an identifier, the identifier being capable of identifying media and related information based on specifications of the interactive media service device and profile of a user of the interactive media service device; and
c. a display module, the display module being capable of displaying the media to the user.

10. The interactive media service device according to claim 9 or 10 further comprising an extraction module for extracting media and related information selected by the user onto the interactive media service device.

11. The interactive media service device according to claim 9 further comprising an input module, the input module enabling the user selection of desired media.
